Europäisches Patentamt

European Patent Office

Office européen des brevets

(11) Veröffentlichungsnummer: **0 304 574 B1**

(12) **EUROPÄISCHE PATENTSCHRIFT**

(45) Veröffentlichungstag der Patentschrift: **16.09.92**

(21) Anmeldenummer: **88109757.0**

(22) Anmeldetag: **18.06.88**

(51) Int. Cl.5: **H02P 7/00**, G05B 19/04, H02P 7/638

(54) Stromversorgungseinrichtung mit verschiedenartigen, daran anschliessbaren Elektrowerkzeugen.

(30) Priorität: **07.08.87 DE 3726262**

(43) Veröffentlichungstag der Anmeldung:
**01.03.89 Patentblatt 89/09**

(45) Bekanntmachung des Hinweises auf die Patenterteilung:
**16.09.92 Patentblatt 92/38**

(84) Benannte Vertragsstaaten:
**AT BE CH DE ES FR GB GR IT LI LU NL SE**

(56) Entgegenhaltungen:
EP-A- 0 132 528          EP-A- 0 198 248
EP-A- 0 198 372          EP-A- 0 283 945
DE-A- 3 518 902          DE-C- 3 722 177
GB-A- 2 061 144          US-A- 4 489 261

PATENT ABSTRACTS OF JAPAN, Band 10,
Nr. 18 (M-448)[2075], 24. Januar 1986;& JP-
A-60 177 844

(73) Patentinhaber: **Festo KG**
**Ruiter Strasse 82**
**W-7300 Esslingen 1(DE)**

(72) Erfinder: **Fetzer, Gerhard, Dipl.-Ing.**
**Mühlhaldenstrasse 25**
**W-7306 Denkendorf(DE)**
Erfinder: **Behrens, Axel, Dipl.-Ing.**
**Uhlandstrasse 44**
**W-7306 Denkendorf(DE)**

(74) Vertreter: **Reimold, Otto, Dr. Dipl.-Phys. et al**
**Patentanwälte Dipl.-Ing. R. Magenbauer**
**Dipl.-Phys. Dr. O. Reimold Dipl.-Phys.Dr. H.**
**Vetter Hölderlinweg 58**
**W-7300 Esslingen(DE)**

**Beschreibung**

Die Erfindung betrifft eine Stromversorgungseinrichtung mit verschiedenartigen, über ein Verbindungskabel mit einem Verbindungsstecker daran anschließbaren Elektrowerkzeugen und mit einer elektronischen Steuervorrichtung in der Stromversorgungseinrichtung zur Steuerung der Elektrowerkzeuge in Abhängigkeit wenigstens eines Parameters.

Eine derartige Stromversorgungseinrichtung ist aus der DE-OS 32 47 046 oder aus der DE-OS 37 09 983 für drehstromgetriebene Elektrowerkzeuge bekannt. Zur drehzahlabhängigen Steuerung des Elektrowerkzeugs wird dort ein Drehstrom mit einer variablen Frequenz von beispielsweise 0 - 400 Hz erzeugt. An diese Stromversorgungseinrichtung kann eine beliebige Zahl verschiedener Elektrowerkzeuge über Verbindungskabel alternativ angeschlossen werden. Die Veränderung der Drehzahl kann beispielsweise mittels eines Potentiometers an der Stromversorgungseinrichtung eingestellt werden.

Werden sehr verschiedenartige Elektrowerkzeuge an diese Stromversorgungseinrichtung angeschlossen, so tritt das Problem auf, daß das eine Elektrowerkzeug mit sehr niedrigen, ein anderes dagegen mit sehr hohen Drehzahlen betrieben wird. Darüber hinaus ist eine Vielzahl anderer Anforderungen gegeben, die bei den verschiedenen Arten von Elektrowerkzeugen unterschiedlich sind. So sind beispielsweise die Anforderungen an das Anlauf- und Bremsverhalten, die Lastbegrenzung, die Drehzahlbegrenzung usw. unterschiedlich. Es ist zwar denkbar, diese Parameter jeweils am Elektrowerkzeug oder an der Stromversorgungseinrichtung über Potentiometer, Schalter od. dgl. individuell einzustellen und beim Einsatz eines anderen Elektrowerkzeugs entsprechend zu verändern, dies ist jedoch aufwendig und kompliziert, insbesondere dann, wenn eine sehr große Vielzahl von Parametern oder Funktionen verändert werden soll. Dies hätte zur Folge, daß für sehr unterschiedliche Elektrowerkzeuge verschiedene Stromversorgungseinrichtungen erforderlich wären, was zu einer Erhöhung des Kostenaufwandes führen würde.

Aus EP-A-0 132 528 sind Werkzeuge für numerisch gesteuerte Bearbeitungszentren bekannt, bei denen über einen Verbindungsstecker zum Werkzeug durch ein elektrisches Spannungssignal werkzeugspezifische Codierungen ausgelesen werden und ein entsprechendes Steuerverhalten im Bearbeitungszentrum eingestellt wird. Als Kodierung sind werkzeugspezifische Kenndaten wie Länge, Durchmesser und Standzeit vorgesehen.

Eine Aufgabe der Erfindung besteht daher darin, eine Stromversorgungseinrichtung der eingangs genannten Gattung zu schaffen, an die auch sehr unterschiedliche Elektrowerkzeuge anschließbar sind, wobei sich jeweils gewünschte elektrische Betriebseigenschaften ohne manuelle Umstellung jeweils von selbst einstellen.

Diese Aufgabe wird erfindungsgemäß durch die kennzeichnenden Merkmale des Anspruches 1 gelöst.

Sofort nach dem Herstellen der Verbindung zwischen dem Elektrowerkzeug und der Stromversorgungseinrichtung können durch die letztere in Abhängigkeit der abgefragten Codierung die gewünschten werkzeugspezifischen Grenzwerte und Funktionen automatisch eingestellt werden. Dadurch kann eine einzige Stromversorgungseinrichtung für sehr verschiedenartige Elektrowerkzeuge unterschiedlicher Größe eingesetzt werden, so daß die Investitionskosten gering gehalten werden können. Die Anpassung an die jeweilige Maschine erfolgt automatisch, das heißt, es ist keine umständliche Einstellung und Anpassung erforderlich, und es können auch keine Einstellfehler auftreten.

Durch die in den Unteransprüchen aufgeführten Maßnahmen sind vorteilhafte Weiterbildungen und Verbesserungen der im Anspruch 1 angegebenen Stromversorgungseinrichtung möglich.

Durch die vielfältigen Möglichkeiten der Codierung kann eine sehr spezifische Anpassung an den jeweiligen Werkzeugtyp erfolgen. So können beispielsweise über die Codiereinrichtung Grenzwerte für Parameter wie Drehzahl, Temperatur, Drehmoment, elektrischer Strom, elektrische Spannung od. dgl. sowie Steuerfunktionen für das jeweilige Elektrowerkzeug, wie Drehzahlbereiche, Anlauf- und Bremsverhalten, Arbeitskennlinien od. dgl., vorgeben werden.

Besonders vorteilhaft erweist sich die Anordnung der Codiereinrichtung im Verbindungsstecker am Verbindungskabel zur Stromversorgungseinrichtung. Die Codiereinrichtung könnte selbstverständlich auch im Elektrowerkzeug selbst angeordnet sein, jedoch wären dann zusätzliche Leitungen im Verbindungskabel erforderlich und ein Austausch der Codiervorrichtung erschwert. Dagegen kann der Verbindungsstecker auf sehr einfache Weise ausgewechselt werden, so daß auch nachträglich noch eine Codierung anbringbar ist. Neben einer mechanischen Codiereinrichtung erweist sich eine elektrische Codiereinrichtung als besonders vorteilhaft. Im einfachsten Falle kann es sich dabei um eine analoge, elektrische Codiereinrichtung handeln, die über Widerstände im Verbindungsstecker realisiert wird. Diese Widerstände werden zweckmäßigerweise einseitig mit einer Masse- oder Null-Leitung verbunden, während ihr anderer Anschluß an Verbindungskontakten des Verbindungssteckers liegt. Die die verschiedenen Codierfunktionen vorgebenden Widerstandswerte werden von der elektrischen Steuervorrichtung aus über zugeordnete Gegenkontakte in einer entsprechenden Kupplung oder einem Gegenstecker erfaßt. Zur Erfassung der Widerstandswerte können die Gegenkontakte vorzugsweise mit Stromquellen verbunden werden, wobei die an den Gegenkontakten abgegriffenen Spannungen als Codierspannungen der elektronischen Steuervorrichtung zugeführt werden. Verschiedene Codierungen können dadurch in einfacher Weise durch verschiedene Sätze von Widerständen durchgeführt werden, was zu einer sehr kostengünstigen Codierung führt, die ein Austauschen des Codier-Verbindungssteckers bei einem Defekt oder einer Änderung der Codierung unproblematisch macht.

Vorteilhaft erweist sich auch eine digitale elektrische Codiereinrichtung durch einen digitalen Speicher, der vorzugsweise ebenfalls im Verfindungsstecker angeordnet ist, jedoch auch im Elektrowerkzeug angebracht werden kann. Der Vorteil einer derartigen Codierung besteht vor allem bei der Ausbildung als serieller Speicher darin, daß eine sehr große Vielzahl verschiedener Codierwerte oder -funktionen vorgesehen werden kann, wobei zur Erfassung der Codierung lediglich je zwei Verbindungskontakte und Gegenkontakte erforderlich sind, da die Codierung seriell ausgelesen wird. Diese Anordnung erlaubt daher eine sehr exakte Anpassung an das jeweilige Elektrowerkzeug über eine sehr vielseitige und detaillierte Codierung, wobei der Aufwand bei einer Erhöhung der Codierwerte und -funtionen kaum erhöht wird, so daß sich eine derartige digitale Codierung vor allem für komplizierte, vielseitige Codierungen eignet.

Das Auslesen der Codierung wird zweckmäßigerweise durch Einstecken des Verbindungssteckers initiiert, was im übrigen auch für andere Arten der Codierung zweckmäßig erscheint. Tritt ein Fehler beim Auslesen der Codierung auf, so erfolgt eine automatische Wiederholung des Auslesevorgangs, wobei nach einer vorgebbaren Anzahl von Fehlversuchen in vorteilhafter Weise ein optischer oder akustischer Fehlerindikator vorgesehen ist. Hierdurch kann verhindert werden, daß durch eine fehlerhafte Codierung das Elektrowerkzeug in unkontrollierbarer Weise arbeitet.

Durch Ausbildung des die Codierung enthaltenden Speichers als Lese- und Schreibspeicher, insbesondere als E$^2$PROM, kann die Codierung ohne Veränderung der Hardware auch noch nachträglich verändert werden oder überhaupt erst nachträglich gespeichert werden. Dies gestattet beispielsweise die Herstellung einheitlicher Verbindungskabel und Verbindungsstecker für alle verschiedenen Arten von Elektrowerkzeugen, wobei die Codierung erst bei fertigem, mit einem Verbindungskabel versehenen Elektrowerkzeug durchgeführt wird. Wünscht ein Anwender für spezielle Einsatzarten eines Elektrowerkzeugs eine abweichende Codierung, beispielsweise andere Grenzwerte, so kann die Codierung auf einfache Weise nachträglich durch Verändern der Daten im Speicher des Verbindungssteckers verändert werden.

Auf einfache Weise können vor dem Verkauf des Elektrowerkzeugs auch Kenndaten wie Gerätetyp, Gerätenummer, Verkaufsdatum, Besitzer od. dgl. eingegeben werden, so daß sich Garantie-, Reparatur- und Serviceleistungen vereinfachen. Auch zur Verhinderung oder zum Nachweis eines Diebstahls können sich solche Daten als nützlich erweisen.

Vorteilhaft ist auch die Speicherung von Fehlersignalen während des Betriebs in diesem Speicher, wobei eine entsprechende Aufbereitung auftretender Fehlfunktionen durch einen Mikrocomputer in der Stromversorgungseinrichtung in an sich bekannter Weise erfolgen kann. Beim Service oder bei einer Reparatur können die Fehlerdaten ausgelesen werden, wodurch ein Fehler auf einfache Weise erkannt werden kann, insbesondere dann, wenn er nur gelegentlich auftritt. Auch versteckte, vom Benutzer bisher nicht erkannte Fehler können auf diese Weise erkannt und beseitigt werden, bevor ein größerer Schaden eintritt.

Um beispielsweise die Drehzahl des Elektrowerkzeugs von diesem aus einstellen zu können oder Überwachungsfunktionen in diesem durchzuführen, enthält das Verbindungskabel zweckmäßigerweise neben Stromversorgungsleitungen auch Steuerleitungen, wobei die Bedienung des Elektrowerkzeugs durch wenigstens ein Bedienelement am Elektrowerkzeug von dort aus über die Steuerleitungen und die elektronische Steuervorrichtung in der Stromversorgungseinrichtung erfolgt. In der elektronischen Steuervorrichtung werden dabei in vorteilhafter Weise in Abhängigkeit der jeweiligen Codierung entsprechende Bedien- und Überwachungsfunktionen erzeugt. Hierdurch können beispielsweise in jedem Elektrowerkzeug dieselben Bedienungselemente verwendet werden, obwahl beispielsweise durch diese verschiedene Drehzahlbereiche eingestellt werden sollen. Der elektrische Widerstand des Bedienungselements oder eine entsprechende Steuerspannung wird in der elektronischen Steuervorrichtung in Abhängigkeit der jeweiligen Codierung interpretiert, so daß eine weitere Vereinheitlichung des Systems durch identische Bedienungselemente oder Überwachungselemente erreicht wird.

Ausführungsbeispiele der Erfindung sind in der Zeichnung dargestellt und in der nachfolgenden Beschreibung näher erläutert. Es zeigen:

Fig. 1 eine schematische, schaltungsmäßige Darstellung eines mit einer Stromversorgungseinrichtung über ein Verbindungskabel verbundenes Elektrowerkzeug mit digitaler Codierung und

Fig. 2 eine analoge Codierung in einer Teildarstellung.

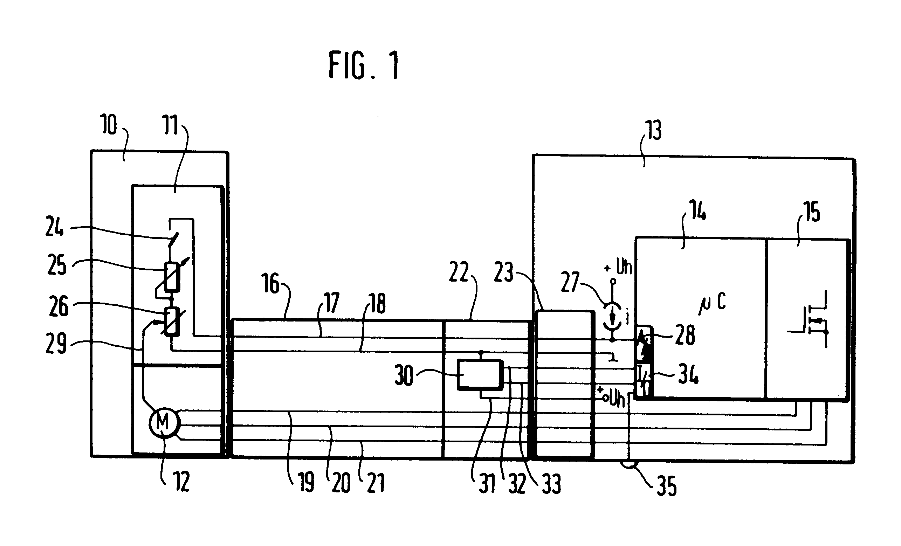

Gemäß Fig. 1 besteht ein Elektrowerkzeug 10, das beispielsweise als Winkelschleifer, Stichsäge, Kreissäge, Hobel od.dgl. ausgebildet sein kann, elektrisch gesehen im wesentlichen aus einem Bedienungselement 11 und einem Drehstrommotor 12, der vorzugsweise als Asynchronmotor ausgebildet ist. Die schematisch dargestellte Stromversorgungseinrichtung 13 besteht im wesentlichen aus einer elektronischen, als Microcomputer ausgebildeten Steuervorrichtung 14 und einem elektronischen Leistungsteil 15. In einem vom Elektrowerkzeug 10 ausgehenden Verbindungskabel 16 sind fünf Leitungen angeordnet, nämlich zwei Steuerleitungen 17, 18 und drei Betriebsstromleitungen 19 - 21 zur Drehstromversorgung des Drehstrommotors 12 vom Leistungsteil 15 aus. Das Verbindungskabel 16 ist mit einem Verbindungsstecker 22 versehen, der in eine entsprechend ausgebildete Steckdose 23 an der Stromversorgungseinrichtung 13 einsteckbar ist.

Die Steckverbindung könnte selbstverständlich prinzipiell auch am Elektrowerkzeug 10 oder im Kabel zwischen dem Elektrowerkzeug 10 und der Stromversorgungseinrichtung 13 angeordnet sein.

Gemäß dem eingangs angegebenen Stand der Technik bildet die elektronische Steuervorrichtung 14 zusammen mit dem Leistungsteil 15 u. a. einen Umrichter zur Umwandlung der der Stromversorgungseinrichtung 13 zugeführten Netzwechselspannung in eine Drehspannung mit einstellbarer, variabler Frequenz und Amplitude, wobei die Einstellung prinzipiell über ein Potentiometer erfolgt.

Im Bedienungselement 11 ist die Reihenschaltung eines Betriebsschalters 24 mit einem als Potentiometer ausgebildeten Drehzahlsteller 25 und einem PTC-Widerstand 26 vorgesehen. Die äußeren Anschlüsse dieser Reihenschaltung sind auf seiten des PTC-Widerstandes 26 über die Steuerleitung 18 in der Stromversorgungseinrichtung 13 mit Masse bzw. einem Null-Leiter und auf seiten des Betriebsschalters 24 über die Steuerleitung 17 mit einer Stromquelle 27 verbunden, die von einer Hilfsspannung $U_h$ versorgt wird. Am Verknüpfungspunkt der Stromquelle 27 mit der Steuerleitung 17 liegt eine Steuerspannung für den Umrichter bzw. die Einstellung der Frequenz und/oder der Amplitude des Drehstroms zur Versorgung des Drehstrommotors 12 an, die über einen A/D-Wandler 28 der elektronischen Steuervorrichtung 14 zugeführt wird. Der PTC-Widerstand 26 ist mit dem Drehstrommotor 12 wärmeleitend verbunden, was durch die Linie 29 angedeutet ist.

Eine derartige Steuerung ist beispielsweise aus Der DE-OS 37 22 177 bekannt und wird daher nicht im Detail beschrieben. Wesentlich ist lediglich, daß durch Veränderung der Steuerspannung über den Drehzahlsteller 25 die Drehzahl des Drehstrommotors 12 eingestellt werden kann, und daß bei einer unzulässig hohen Motortemperatur die Drehzahl über den PTC-Widerstand 26 auf einen Minimalwert abgesenkt wird. Selbstverständlich können zusätzliche Steuer- und Überwachungsfunktionen durch zusätzliche Widerstände oder andere Schaltelemente realisiert werden, die auf die Steuerspannung einwirken.

In einer einfacheren Ausführung kann eine derartige Fernsteuerung über die Steuerleitungen 17, 18 auch entfallen, wobei dann der Betriebsschalter 24 und wahlweise auch der PTC-Widerstand 26 direkt auf die elektrischen Ströme in den Betriebsstromleitungen 19 - 21 einwirken.

Im Verbindungsstecker 22 ist ein digitaler Speicher 30 angeordnet, der als serieller PROM, vorzugsweise als $E^2$PROM ausgebildet ist. Zur Stromversorgung ist er an die mit Masse verbundene Steuerleitung 18 sowie über eine weitere Stromversorgungsleitung 31 in der Stromversorgungseinrichtung 13 mit einer Hilfsspannung $U_h$ verbunden. Zwei Datenübertragungsleitungen 32, 33 führen vom Speicher 30 zu einem I/O-Kreis 34 (Eingangs-/Ausgangskreis) der Steuervorrichtung 14.

Auf diese Weise sind am Verbindungsstecker 22 acht nicht näher dargestellte Verbindungskontakte und entsprechend an der Steckdose 23 acht entsprechende Gegenkontakte vorgesehen.

Im digitalen Speicher 30 wird eine werkzeugspezifische Codierung eingespeichert, vorzugsweise nach der fertigen Montage des Elektrowerkzeugs 10, wenn dieses bereits mit dem Verbindungskabel 16 und dem Verbindungsstecker 22 versehen ist. Wird nun der Verbindungsstecker 22 in die Steckdose 23 eingesteckt, so werden die die Codierung bildenden Daten seriell über die Datenübertragungsleitungen 32, 33 und den I/O-Kreis 34 in die elektronische Steuervorrichtung 14 eingelesen. Über diese Codierung werden beispielsweise Grenzwerte für Parameter wie Drehzahl, Temperatur, Drehmoment, elektrischer Strom, elektrische Spannung od.dgl. vorgegeben, und zusätzlich können Steuerfunktionen für das jeweils angeschlossene Elektrowerkzeug der elektronischen Steuervorrichtung 14 vorgegeben werden, wie die Vorgabe des Drehzahlbereichs, eines bestimmten Anlauf- und/oder Bremsverhaltens, von Arbeitskennlinien, einer Strom/Widerstands-Kompensation zur Anpassung im Bereich der Feldschwächung od.dgl. Auf diese Weise können im Programm der elektronischen Steuervorrichtung 14 enthaltene Grundsteuerfunktionen und Grundüberwachungsfunktionen durch die Codierdaten modifiziert werden, so daß die Stromversorgung des Drehstrommotors 12 über die Betriebsstromleitungen 19 - 21 in Abhängigkeit der so gebildeten und modifizierten Funktionen erfolgt. Hierdurch können die verschiedensten Elektrowerkzeuge an dieselbe Stromversorgungseinrichtung 13 angeschlossen werden, wobei jeweils automatisch durch Auslesen der im Verbindungsstecker enthaltenen Codierdaten eine elektrische Anpassung erfolgt.

Die Codierung wirkt sich konsequenterweise auch auf die Signale bzw. Steuerspannungen des Bedienungselements 11 aus. In der elektronischen Steuervorrichtung 14 werden diese Signale in Abhängigkeit der ausgelesenen Codierung umgesetzt bzw. nach Art eines Funktionsgenerators beeinflußt, so daß sämtliche der verschiedenen Elektrowerkzeuge mit demselben Bedienungselement 11 ausgerüstet werden können. Beispielsweise gibt dann der Drehzahlsteller 25 in Abhängigkeit der jeweiligen Codierung unterschiedliche Drehzahlbereiche vor.

Wie bereits ausgeführt, erfolgt das Auslesen der Codierung aus dem Speicher 30 automatisch nach dem Einstecken des Verbindungssteckers 22 in die Steckdose 23. Tritt beim Auslesen ein Fehler auf, das heißt, werden Daten ausgelesen, die der Mikrorechner als Fehldaten interpretiert, weil sie beispielsweise außerhalb der vorgegebenen und möglichen Grenzwerte liegen, so wird der Auslesevorgang automatisch wiederholt. Nach einer durch das Ausleseprogramm vorgebbaren Anzahl von Fehlversuchen wird dann über den I/O-Kreis 34 ein Fehlersignal an einen optischen oder akustischen Fehlerindikator 35 abgegeben, das heißt, es wird ein Ton oder ein vorzugsweise blinkendes Lichtsignal erzeugt. Um den Auslesevorgang zu wiederholen, muß der Netzstecker aus- und eingesteckt werden oder die Stromversorgung auf andere Weise unterbrochen werden.

Speicherbereiche des Speichers 30 können weiterhin dazu verwendet werden, Kenndaten des Elektrowerkzeugs wie Gerätetyp, Gerätenummer, Verkaufsdatum, Besitzer od.dgl. einzuspeichern. Die käuferspezifischen Daten können dabei kurz vor dem Verkauf über eine entsprechende Codiereinrichtung eingegeben werden. Diese Angaben ermöglichen eine problemlose Abwicklung von Garantie -, Reparatur- und Serviceleistungen. Schließlich können Speicherbereiche auch als Fehlerspeicher genutzt werden, das heißt durch ein spezielles Fehlerprogramm im Mikrorechner werden während des Betriebs auftretende Fehler wie Fehlfunktionen, Fehlsignale od.dgl. erkannt und als entsprechende Daten im Speicher 30 gespeichert. Bei einer Inspektion oder einer Reparatur können diese Daten dann in der Werkstatt ausgelesen und ausgewertet werden. Hierdurch lassen sich Fehler auf einfache Weise bestimmen, insbesondere auch solche Fehler, die nur sporadisch auftreten.

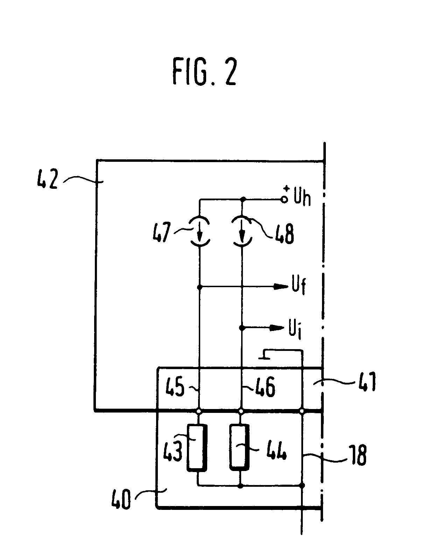

In Fig. 2 ist ein weiteres Ausführungsbeispiel mit einer analogen Codierung ausschnittsweise dargestellt. Ein Verbindungsstecker 40 ist dabei in eine Steckdose 41 einer Stromversorgungseinrichtung 42 eingesteckt. Von diesen Teilen sind jeweils nur diejenigen Bereiche dargestellt, die die Codierung betreffen. Diese erfolgt über Widerstände 43, 44 im Verbindungsstecker 40, die einseitig miteinander verbunden und an der an Masse liegenden Steuerleitung 18 angeschlossen sind. Die beiden anderen Anschlüsse der Widerstände 43, 44 sind über Leitungen 45, 46 mit Stromquellen 47, 48 in der Stromversorgungseinrichtung 42 verbunden, die wiederum von der Hilfsspannung $U_h$ gespeist werden. An den Leitungen 45, 46 können die an den Widerständen 43, 44 abgefallenen Spannungen $U_f$ und $U_i$ abgegriffen und der Steuervorrichtung 14 zugeführt werden.

Durch jeden der Widerstände 43, 44 kann ein Wert oder eine Funktion codiert werden, beispielsweise durch den Widerstand 43 der Frequenz- bzw. Drehzahlbereich für den Drehstrommotor 12 und durch den Widerstand 44 der maximale Stromwert, der eine Last- bzw. Drehmomentbegrenzung beinhaltet. Die entsprechenden Codierspannungen $U_f$ und $U_i$ werden im Falle einer als Mikrocomputer ausgebildeten elektronischen Steuervorrichtung über einen A/D-Wandler dieser zugeführt, oder im Falle einer analogen Auswertung einem entsprechenden analogen Funktionsgenerator.

Diese Art der Codierung ist vor allem für eine geringe Zahl von Codierwerten oder Codierfunktionen geeignet, da jeweils nur ein einziger Codierwiderstand erforderlich ist. Wird die Zahl der Codierwerte bzw. Codierfunktionen zu groß, so steigt die Zahl der Leitungen 45, 46 zu stark an, so daß die in Fig. 1 dargestellte Lösung vorzuziehen ist.

Schließlich ist es auch noch möglich, eine mechanische Codierung vorzusehen, bei der beispielsweise Codierzapfen am Verbindungsstecker in entsprechende Vertiefungen der Steckdose eingreifen und dort eine elektrische Verbindung herstellen bzw. lösen.

**Patentansprüche**

1. Stromversorgungseinrichtung (13) mit verschiedenartigen, über ein Verbindungskabel mit einem Verbindungsstecker (22) daran anschließbaren Elektrowerkzeugen (10) und mit einer elektronischen Steuervorrichtung (14) in der Stromversorgungseinrichtung (13) zur Steuerung der Elektrowerkzeuge in Abhängigkeit wenigstens eines Parameters, dadurch gekennzeichnet, daß eine über den Verbindungsstecker (22;40) für die Stromversorgung zum Elektrowerkzeug (10) durch ein elektrisches Spannungssignal der elektronischen Steuervorrichtung (14) abgreifbare und in dieser ein entsprechendes Steuerverhalten für das jeweilige Elektrowerkzeug (10) einstellende, werkzeugspezifische Codiereinrichtung (30; 43, 44) im Verbindungsstecker (22; 40) oder im Elektrowerkzeug (10) vorgesehen ist, und daß über die Codiereinrichtung (30; 43, 44) Grenzwerte für Parameter wie Drehzahl, Temperatur, Drehmoment, elektrischer Strom, elektrische Spannung und/oder Steuerfunktionen für das jeweilige Elektrowerkzeug (10), wie Drehzahlbereiche, Anlauf- und Bremsverhalten, Arbeitskennlinien vorgebbar sind.

2. Stromversorgungseinrichtung nach Anspruch 1, dadurch gekennzeichnet, daß die Codiereinrichtung im Verbindungsstecker als mechanische Codiereinrichtung ausgebildet ist.

3. Stromversorgungseinrichtung nach Anspruch 1, dadurch gekennzeichnet, daß eine analoge, elektrische Codiereinrichtung (43, 44) vorgesehen ist.

4. Stromversorgungseinrichtung nach Anspruch 3, dadurch gekennzeichnet, daß als Codiereinrichtung (43, 44) Widerstände vorgesehen sind.

5. Stromversorgungseinrichtung nach Anspruch 4, dadurch gekennzeichnet, daß die einseitig mit einer Masse- oder Null-Leitung (18) verbundenen Widerstände (43, 44) mit ihrem anderen Anschluß an Verbindungskontakten des Verbindungssteckers (40) liegen und daß die die verschiedenen Codierfunktionen vorgebenden Widerstandswerte von der elektronischen Steuervorrichtung (14) über zugeordnete Gegenkontakte erfaßt werden.

6. Stromversorgungseinrichtung nach Anspruch 5, dadurch gekennzeichnet, daß die Gegenkontakte mit Stromquellen (47, 48) verbunden sind und daß die an den Gegenkontakten abgegriffenen Spannungen ($U_f$, $U_i$) als Codierspannungen der elektronischen Steuervorrichtung (14) zugeführt werden.

7. Stromversorgungseinrichtung nach Anspruch 1, dadurch gekennzeichnet, daß eine als digitaler Speicher (30) ausgebildete elektrische Codiereinrichtung vorgesehen ist.

8. Stromversorgungseinrichtung nach Anspruch 7, dadurch gekennzeichnet, daß der Speicher (30) als serieller Speicher mit serieller Ausgabe der verschiedenen Codierwerte oder -funktionen ausgebildet ist.

9. Stromversorgungseinrichtung nach Anspruch 8, dadurch gekennzeichnet, daß je zwei Verbindungskontakte und Gegenkontakte zur Datenübertragung vorgesehen sind.

10. Stromversorgungseinrichtung nach einem der Ansprüche 7 bis 9, dadurch gekennzeichnet, daß das Auslesen der Codierung durch Einstecken des Verbindungssteckers (22; 40) initiierbar ist.

11. Stromversorgungseinrichtung nach Anspruch 10, dadurch gekennzeichnet, daß beim Auftreten eines Fehlers beim Auslesevorgang eine Wiederholung desselben erfolgt, wobei ein nach einer vorgebbaren Anzahl von Fehlversuchen einschaltender, optischer oder akustischer Fehlerindikator (35) vorgesehen ist.

12. Stromversorgungseinrichtung nach einem der Ansprüche 7 bis 11, dadurch gekennzeichnet, daß der Speicher (30) als Lese- und Schreibspeicher, insbesondere als $E^2PROM$, ausgebildet ist.

13. Stromversorgungseinrichtung nach Anspruch 12, dadurch gekennzeichnet, daß ein das Einlesen oder Ändern der Codierung vor oder nach der Montage gestattender, einheitlicher Verbindungsstecker (22) vorgesehen ist.

14. Stromversorgungseinrichtung nach Anspruch 12 oder 13, dadurch gekennzeichnet, daß ein Speicherbereich des Speichers (30) zur Aufnahme von Kenndaten wie Gerätetyp, Gerätenummer, Verkaufsdatum, Besitzer od.dgl. vorgesehen ist.

15. Stromversorgungseinrichtung nach einem der Ansprüche 12 bis 14, dadurch gekennzeichnet, daß ein Speicherbereich des Speichers (30) für während des Betriebs auftretende Fehlersignale vorgesehen ist.

16. Stromversorgungseinrichtung nach einem der vorhergehenden Ansprüche, dadurch gekennzeichnet, daß im Verbindungskabel (16) neben Stromversorgungsleitungen (19-21) Steuerleitungen (17, 18) vorgesehen sind und daß die Bedienung des Elektrowerkzeugs (10) durch wenigstens ein Bedienungselement (11) am Elektrowerkzeug (10) von dort aus über die Steuerleitungen (17, 18) und die elektronische Steuervorrichtung (14) in der Stromversorgungseinrichtung (13) erfolgt, wobei in der elektronischen Steuervorrichtung (14) in Abhängigkeit der jeweiligen Codierung entsprechende Bedien- und Überwachungsfunktionen erzeugbar sind.

## Claims

1. Power supply unit (13) with various power tools (10) connectable to it via a connection cable with a connector (22), and with an electronic control device (14) in the power supply unit (13) to control the power tools depending on one or more parameters, characterized in that a tool-specific coding device (30; 43,44), readable through an electric voltage signal from the electronic control device (14) via the connector (22; 40) for the power supply to the power tool (10) and in which a suitable control pattern for the respective power tool (10) is set, is provided in the connector (22; 40) or in the power tool (10) and that, through the coding device (30; 43, 44), limit values for parameters such as speed, temperature, torque, electric current, electric voltage and/or control functions for the respective power tool (10), such as speed ranges, starting and braking patterns, operating characteristics can be preset.

2. Power supply unit according to claim 1, characterized in that the coding device in the connector is designed as a mechanical coding device.

3. Power supply unit according to claim 1, characterized in that an analog, electrical coding device (43, 44) is provided.

4. Power supply unit according to claim 3, characterized in that resistors are provided as the coding device (43, 44).

5. Power supply unit according to claim 4, characterized in that the resistors (43, 44) connected on one side to an earth or neutral wire (18) have their other connection at connection contacts of the connector (10) and that the resistance values of the electronic control device (14) presetting the various coding functions are acquired via associated mating contacts.

6. Power supply unit according to claim 5, characterized in that the mating contacts are connected to power sources (47, 48) and that the voltages ($U_f$, $U_i$) read off at the mating contacts are supplied as coding voltages of the electronic coding device (14).

7. Power supply unit according to claim 1, characterized in that an electrical coding device in the form of a digital memory (30) is provided.

8. Power supply unit according to claim 7, characterized in that the memory (30) is designed as a serial memory with serial output of the various coding values or functions.

9. Power supply unit according to claim 8, characterized in that two connection contacts and two mating contacts are provided for data transmission.

10. Power supply unit according to any of claims 7 to 9, characterized in that reading of the coding can be initiated by plugging in the connector (22; 40).

11. Power supply unit according to claim 10, characterized in that, if an error occurs in the reading process, the process is repeated, and that a visual or audible fault indicator (35), actuated after a preset number of unsuccessful attempts, is provided.

12. Power supply unit according to any of claims 7 to 11, characterized in that the memory (30) is designed as a read-write memory, in particular $E^2PROM$.

13. Power supply unit according to claim 12, characterized in that a standard connector (22) permitting the reading-in or amendment of the coding before or after assembly, is provided.

14. Power supply unit according to claims 12 or 13, characterized in that a memory area of the memory (30) is provided to hold characteristic data such as equipment type, equipment number, date sols, owner or the like.

15. Power supply unit according to any of claims 12 to 14, characterized in that a memory area of the memory (30) is provided for fault signals occurring during operation.

16. Power supply unit according to any of the preceding claims, characterized in that the connection cable (16) is provided with control lines (17, 18) in addition to the power supply line (19 - 21), and that operation of the power tool (10) is effected by one or more operating elements (11) on the power tool (10) via the control line (17, 18) and the electronic control device (14) in the power supply unit (13), while suitable operating and monitoring functions can be generated in the electronic control device (14) depending on the respective coding.

## Revendications

1. Dispositif d'alimentation électrique (13) utilisé avec des outils électriques (10) de différents types, pouvant être raccordés à celui-ci par un câble de liaison avec un connecteur (22) et comportant un dispositif de commande (14) électronique, dans le dispositif d'alimentation électrique (13), en vue de la commande des outils électriques en fonction d'au moins un paramètre, caractérisé en ce qu'il est prévu dans le connecteur (22 ; 40) ou dans l'outil électrique (10), un dispositif de codage (30 ; 43, 44) spécifique à l'outil, pouvant être utilisé par l'intermédiaire du connecteur (22 ; 40) pour l'alimentation électrique de l'outil électrique (10), par un signal de tension électrique du dispositif de commande électronique (14) et instaurant dans ce dernier un comportement de commande correspondant pour l'outil électrique (10) respectif, et en ce que par l'intermédiaire du dispositif de codage (30 ; 43, 44) il est possible d'imposer des valeurs limites de paramètres tels que la vitesse de rotation, la température, le couple de rotation, l'intensité, la tension et/ou des fonctions de commande pour l'outil électrique (10) respectif telles que des plages de vitesse, un comportement au démarrage et au freinage, des courbes caractéristiques de travail.

2. Dispositif d'alimentation électrique selon la revendication 1, caractérisé en ce que le dispositif de codage placé dans le connecteur est un dispositif de codage mécanique.

3. Dispositif d'alimentation électrique selon la revendication 1, caractérisé en ce qu'il est prévu un dispositif de codage électrique (43, 44) analogique.

4. Dispositif d'alimentation électrique selon la revendication 3, caractérisé en ce qu'il est prévu comme dispositif de codage (43, 44) des résistances.

5. Dispositif d'alimentation électrique selon la revendication 4, caractérisé en ce que les résistances (43, 44), reliées par une extrémité avec une ligne de masse ou de neutre (18), sont reliées par leur autre extrémité à des contacts de connexion du connecteur (40) et en ce que les valeurs de résistance, imposant les différentes fonctions de codage, sont enregistrées par le dispositif de commande électronique (14), par l'intermédiaire de contre-contacts correspondants.

6. Dispositif d'alimentation électrique selon la revendication 5, caractérisé en ce que les contre-contacts sont reliés à des sources électriques (47, 48) et en ce que les tensions ($U_f$, $U_i$), prélevées sur les contre-contacts, sont amenées sous forme de tensions de codage au dispositif de commande électronique (14).

7. Dispositif d'alimentation électrique selon la revendication 1, caractérisé en ce qu'il est prévu un dispositif de codage électrique, conçu comme une mémoire numérique (30).

8. Dispositif d'alimentation électrique selon la revendication 7, caractérisé en ce que la mémoire (30) est une mémoire série avec sortie série des différentes valeurs ou fonctions de codage.

9. Dispositif d'alimentation électrique selon la revendication 8, caractérisé en ce qu'il est prévu deux contacts de connexion et deux contre-contacts pour la transmission des données.

10. Dispositif d'alimentation électrique selon l'une des revendications 7 à 9, caractérisé en ce que la sélection du codage peut être initialisée par insertion du connecteur (22 ; 40).

11. Dispositif d'alimentation électrique selon la revendication 10, caractérisé en ce que dans le cas de l'apparition d'une erreur lors de la sélection, cette sélection est renouvelée, un indicateur d'erreur (35) optique ou acoustique étant prévu, lequel s'enclenche après un nombre donné de tentatives manquées.

12. Dispositif d'alimentation électrique selon l'une des revendications 7 à 11, caractérisé en ce que la mémoire (30) est une mémoire vive, en particulier une mémoire $E^2PROM$.

13. Dispositif d'alimentation électrique selon la revendication 12, caractérisé en ce qu'il est prévu un connecteur (22) unique autorisant la lecture ou la modification du codage avant ou après le montage.

14. Dispositif d'alimentation électrique selon la revendication 12 ou 13, caractérisé en ce qu'une zone de la mémoire (30) est prévue pour l'enregistrement de caractéristiques telles que le type de l'appareil, son numéro, la date de vente, le propriétaire ou similaire.

15. Dispositif d'alimentation électrique selon l'une des revendications 12 à 14, caractérisé en ce qu'il est prévu une zone de la mémoire (30) pour des signaux d'erreur apparaissant pendant le fonctionnement.

**16.** Dispositif d'alimentation électrique selon l'une des revendications précédentes, caractérisé en ce qu'il est prévu dans le câble de liaison (16), à côté des lignes d'alimentation électrique (19 à 21), des lignes de commande (17, 18) et en ce que la commande de l'outil électrique (10) s'effectue par au moins un élément de commande (11) placé sur l'outil électrique (10), à partir de là, par les lignes de commande (17, 18) et le dispositif de commande électronique (14), dans le dispositif d'alimentation électrique (13), des fonctions de commande et de contrôle pouvant être réalisées dans le dispositif de commande électronique (14), en fonction du codage respectif.

# FIG. 1

EP 0 304 574 B1

# FIG. 2